# EUROPÄISCHE PATENTSCHRIFT

(11) **EP 0 467 911 B1**
(45) Veröffentlichungstag und Bekanntmachung des Hinweises auf die Patenterteilung: **17.08.1994**
(21) Anmeldenummer: 90905499.1
(22) Anmeldetag: 05.04.1990
(51) Int. Cl.: G11B 15/50, G11B 15/44, G11B 15/665

(54) **RECORDER MIT EINEM WICKEL- UND BANDANTRIEB**
RECORDER WITH WIND AND TAPE DRIVE
ENREGISTREUR A ENTRAINEMENT DES BOBINES D'ENROULEMENT ET DE LA BANDE

(30) Priorität: 13.04.1989 DE 3912098; 21.10.1989 DE 3935150
(43) Veröffentlichungstag der Anmeldung: 29.01.1992
(73) Patentinhaber: DEUTSCHE THOMSON-BRANDT GMBH, 78048 Villingen-Schwenningen (DE)
(72) Erfinder: SCHANDL, Hartmut, A-1110 Wien (AT); WEISSER, Fritz, D-7742 St. Georgen (DE)
(86) Internationale Anmeldenummer: EP9000535
(87) Internationale Veröffentlichungsnummer: WO9012397

(56) Entgegenhaltungen:
- EP-A- 0 087 952
- EP-A- 0 105 501
- EP-A- 0 192 448
- EP-A- 0 212 720
- DE-A- 2 816 699
- GB-A- 1 199 738
- US-A- 3 690 198
- US-A- 4 711 410
- PATENT ABSTRACTS OF JAPAN, vol. 6, no. 241 (P-158)(1119), 30 November 1982
- PATENT ABSTRACTS OF JAPAN, vol. 6, no. 75 (P-114)(953), 12 Mai 1982

## Beschreibung

Video- und Audiorecorder speichern die Information vorzugsweise auf Magentband, welches in einer Kassette auf zwei nebeneinanderliegenden Wickelkörpern untergebracht ist. Die Kassette ist dabei so eingelegt, daß die Wickelkörper kraftschlüssig in entsprechende Dorne der Antriebsmechanismen des Abspielgerätes einrasten.

Bei handelsüblichen Videorecordern mit einer rotierenden Kopftrommel ist es erforderlich, das Magnetband durch eine Fädelmechanik aus der Kassette herauszuziehen und mit Hilfe von Führungen an den Umfang der Kopftrommel anzulegen. Dieser Fädelvorgang wird durch einen Fädelmotor bewirkt, der das Magnetband z.B. mittels von einem über Kurvenscheibe angetriebenen Fädelwagen in seine Spielposition bringt.

Durch einen weiteren Motor, der auch als Capstan-Motor ausgebildet sein kann, werden die Wickelteller angetrieben, wobei dieser Antrieb z.B. über ein Schwenkrad erfolgt, das jeweils an den ziehenden Wickelteller angekoppelt wird, während der Abwickelteller über eine Reibungsbremse die geforderte Bandspannung aufrechterhält. Weil eine gleichmäßige Bandspannung über die gesamte Bandlänge notwendig ist, wird durch einen Bandzugfühler die jeweilige Bandspannung abgetastet und je nach Stellung des Fühlers in eine angepaßte Bremswirkung für den Abwickelteller umgesetzt.

Es ist bekannt, die Wickelteller von einem Capstanmotor, dessen Welle in die Cassette eintaucht, über ein riemengetriebenes Schwenkrad anzutreiben, wobei jeder Wickelteller mit einer Rutschkupplung versehen ist. Der Antrieb erfolgt an der Antriebsseite der Rutschkupplung. Eine gleichmäßige Bandspannung wird über diese Kupplungen in Verbindung mit einer Umschlingungsbremse erreicht, die durch den Bandzugfühler gesteuert, am Kupplungsteil des Abwickeltellers angreift. Für veränderte Geschwindigkeit der Wickelteller z.B. bei Bildsuchlauf ist es üblich, das Schwenkrad über ein oder mehrere Zwischenräder anzutreiben, die z.B. mit Hilfe einer Kulissensteuerung in Eingriff gebracht werden.

Es sind ferner Recorder bekannt, bei denen die Capstanwelle außerhalb der Cassette angeordnet ist, wobei die Gummiandruckrolle, auch GA-Rolle genannt, in die Cassette eintaucht. Für den Spielbetrieb wird die GA-Rolle durch Fädelelemente dem Magnetband nachgeführt, so daß das Magnetband außerhalb der Cassette durch die Capstanwelle angetrieben werden kann. Da bei einer derartigen Anordnung die Drehrichtung der Capstanwelle nicht mit der Drehrichtung eines durch Zwischenrad angetriebenen Schwenkrades übereinstimmt, muß z.B. mittels eines weiteren Zwischenrades eine Drehrichtungsumkehr erfolgen.

Es ist Aufgabe der Erfindung, einen Recorder mit einem außerhalb der Cassettte angeordneten Capstanmotor für den Wickel- und Bandantrieb aufzuzeigen, bei dem 1. eine Drehrichtungsumkehr für den Schwenkradantrieb auf einfache Weise gelöst ist, 2. die Ausführung einer erforderlichen Rutschkupplung vereinfacht ist und 3. eine Drehzahlanpassung der Wickelteller für die verschiedenen Betriebsarten auf einfache Weise ermöglicht wird.

Diese Aufgabe wird gemäß der Erfindung durch die im Anspruch 1 aufgeführten Merkmale gelöst. Vorteilhafte Weiterbildungen der Erfindung sind in den Unteransprüchen gekennzeichnet.

Im Prinzip wird dem die Wickelteller antreibenden Schwenkrad ein Planetengetriebe vorgeschaltet, welches über einen Gummiriemen vom außerhalb der Cassette angeordneten Capstanmotor angetrieben wird. Im Gehäuse des Getriebes ist eine Rutschkupplung integriert, deren Wirkung über Hebel und Steuerscheibe vom Betriebsarten steuernden Fädelmotor einstellbar ist. Die Kupplung besteht aus einem ringförmig ausgeführten Filz und wirkt zwischen einem ortsfesten, höhenverstellbaren Steuerring und einem ebenfalls höhenverstellbaren, um die gemeinsame Kupplungsachse drehbaren Planetenradträger, in welchem die Achsen der Planetenräder gelagert sind. Durch eine zentrisch angeordnete Druckfeder wird die Unterseite des Planetenringträgers auf die Kupplungsscheibe gepreßt. Die Planetenräder selbst sind als Zahnräder ausgeführt und sind auf ihren Achsen frei drehbar. Sie stehen antriebsseitig mit einem über die Riemenscheibe angetriebenen Sonnenrad und abtriebsseitig mit einem das Schwenkrad antreibenden Glockenrad in Eingriff. Abhängig vom Übertragungsmoment, welches von dem Glockenrad an das Schwenkrad übertragen wird, führt der Planetenradträger eine Eigenrotation durch. Wird als Umkehrung dieses Vorganges der Planetenradträger über die einstellbare Kupplung festgehalten oder abgebremst, kann damit ein definiertes Übertragungsmoment vom Schwenkrad an die Wickelteller abgegeben werden. Auf diese Weise ist es möglich, die Wickelteller ohne eigene Rutschkupplung auszubilden.

Es sind bei den einzelnen Betriebsarten für einen konstanten Bandzug unterschiedliche Übertragungsmomente erforderlich. Im "Play"-Betrieb, d.h. bei Aufnahme- und Wiedergabebetrieb, muß bei einer vorgegebenen Antriebsgeschwindigkeit für den Aufwickelteller ein relativ geringes Übertragungsmoment aufgebracht werden. Die Geschwindigkeit wird durch die im Getriebe festgelegte Untersetzung bei stillstehendem Planetenradträger erreicht, d.h. durch die Rutschkupplung wird in dieser Betriebsart der Planetenradträger festgehalten, die Rutschkupplung ist noch nicht aktiv. Erst bei ansteigendem Übertragungsmoment beginnt die Rutschkupplung durchzurutschen, da der Planetenradträger mit geringer Eigengeschwindigkeit in Drehrichtung der antreibenden Riemenscheibe eine Eigenrotation durchführt. Durch die Wirkung der Rutschkupplung wird das Antriebsmoment begrenzt, womit ein gewünschter Aufwickelbandzug gegeben ist.

Für den Betrieb "Suchlauf rückwärts" ist wegen des größeren Bandweges zwischen antreibender Capstanwelle und dem durch das Schwenkrad angetriebenen Wickelteller ein größeres Übertragungsmoment erforderlich. Um dieses zu erreichen, wird das die Rutschkupplung tragende ortsfeste Steuerteil über den Fädelmotor näher an den Planetenradträger herangeführt, so daß die Anpreßkraft am Kupplungsfilz erhöht, und damit das Drehmoment vergrößert wird.

Für den Umspulbetrieb, d.h. für schnellen Vor- oder auch Rücklauf des Magnetbandes wird durch Steuerung vom Fädelmotor das Planetengetriebe überbrückt. Dieses geschieht ebenfalls durch Veränderung der Lage des Planetenringträgers, indem das ortsfeste Steuerteil den Planetenradträger, unterstützt durch die Federkraft der zentrischen Druckfeder, soweit absenkt, daß am Planetenradträger angebrachte Noppen in Ausnehmungen der Riemenscheibe einrasten können. Dadurch werden die Achsen der Planetenräger mit der Riemenscheibe verbunden, so daß die drehende Riemenscheibe über die Planetenräder das Glockenrad direkt antreiben kann.

Dieser Vorgang kann bei ausgefädeltem, nicht angetriebenen Magnetband durchgeführt werden. Lediglich die GA-Rolle muß dabei von der Capstanwelle abgehoben werden.

Der für den Umspulbetrieb beschriebene Vorgang kann ebenfalls durchgeführt werden, wenn eine Drehrichtungsumkehr bei einem Betriebsartenwechsel erforderlich ist. Auf diese Weise ist es möglich, mit Hilfe des Capstanmotors das Schwenkrad in kurzer Zeit von einem zum anderen Wickelteller zu führen, ohne daß der Bandzug des ausgefädelten Magnetbandes eine Änderung erfährt.

Diese Art der Drehrichtungsumkehr hat allerdings den Nachteil, daß eine Standbildwiedergabe mit Einzelschrittfortschaltung in Vorwärts- und Rückwärtsrichtung nicht möglich ist, da bei Abheben der GA-Rolle vom Magnetband ein Überspringen von mehreren Einzelbildern erfolgen kann. Um dennoch bei anliegender GA-Rolle sowie unveränderter Bandposition und Bandspannung eine Drehrichtungsumkehr zu erreichen, erfolgt die Umkehrsteuerung nicht vom Capstanmotor sondern wird vom Fädelmotor durchgeführt. Dieses geschieht bei stehendem Getriebe durch Verdrehung des Planetenringträgers um einen bestimmten Winkel, indem der an sich ortsfeste höhenverstellbare, von außen zugängliche Kupplungsring, der mit den Achsen der Planetenräder über den Kupplungsbelag in Eingriff steht, vom Fädelmotor über ein Getriebe verstellt wird. Bei diesem Vorgang verändert der Kupplungsring seine vorgegebene Höhenstellung, um die Bandspannung bei Anlaufen des Capstanmotors nach erfolgter Umkehrung in der notwendigen Höhe zu erreichen.

Im folgenden soll die Erfindung durch ein Ausführungsbeispiel anhand der Figuren näher erläutert werden:

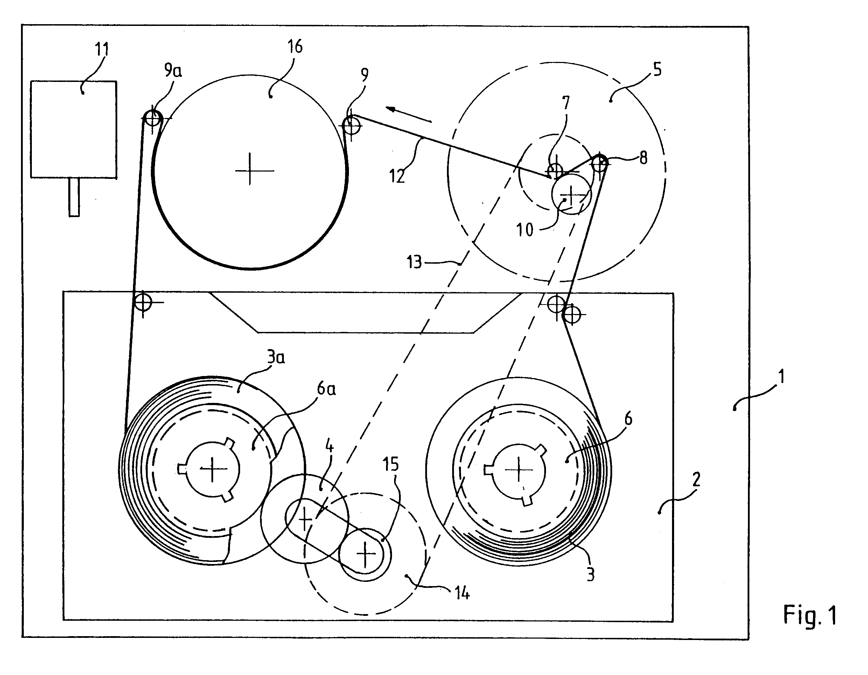

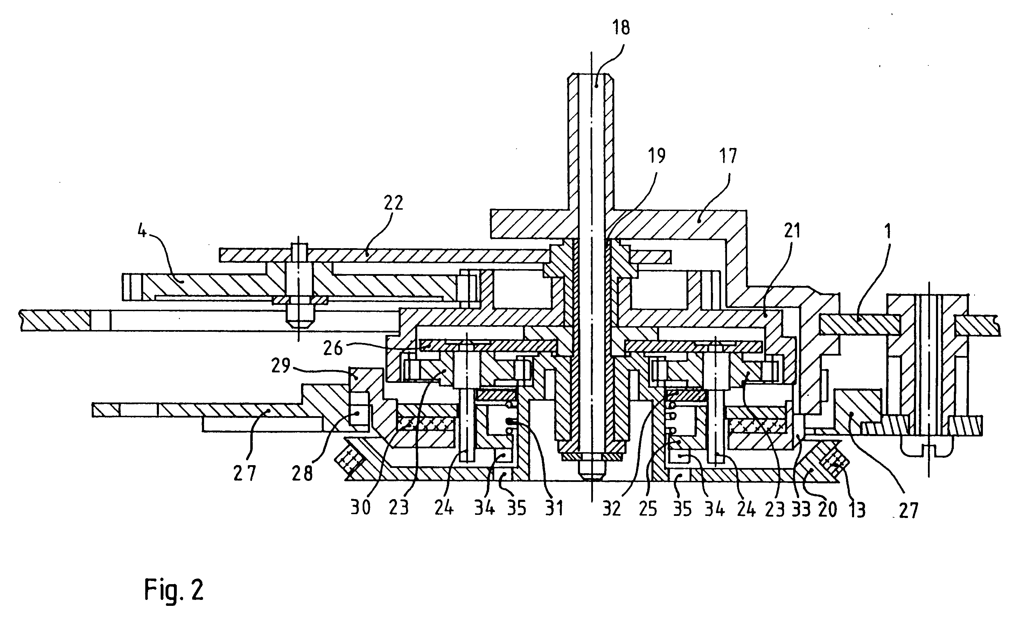

Figur 1 zeigt in einer schematischen Darstellung den Wickel- und Bandantrieb für eine Magnetbandkassette 2, die in einem Laufwerkchassis 1 gelagert ist. Das Magnetband 12 ist durch den Fädelmotor 11 über Fädelelemente 8, 9 und 9a mittels nicht dargestellter Führungen aus der Cassette 2 herausgeführt und um eine Kopftrommel 16 gelegt. Der Capstanmotor 5 ist außerhalb der Cassette 2 angeordnet. Seine Welle 7 treibt einerseits das Magentband 12 in Verbindung mit einer anliegenden GA-Rolle 10 an, dient aber außerdem über Gummiriemen 13 für den Antrieb von Planetengetriebe 14. Mit dem abtreibenden Teil 15, dem Glockenrad von Planetengetriebe 14 steht das Schwenkrad 4 in Eingriff, welches in der Darstellung den Abwickelteller 6a von Magnetbandwickel 3a für die, durch den Pfeil eingezeichnete Bandlaufrichtung antreibt. Da in der Darstellung durch die GA-Rolle 10 das Magnetband 12 angetrieben wird, ist somit die Betriebsart "Suchlauf-Rückwärts" vorgegeben. Wird in dar gezeichneten Anordnung die GA-Rolle 10 durch Fädelmotor 11 von der Capstanwelle abgehoben, ergibt sich die Betriebsart "Umspulen-rückwärts". Für diese Betriebsart muß allerdings der Capstanmotor eine andere Drehrichtung aufweisen, da in dieser Betriebsart, wie in Figur 2 beschrieben, das Planetengetriebe kurzgeschlossen ist.
Figur 2 zeigt in einer Schnittdarstellung das mit Rutschkupplung versehene Planetengetriebe 14. Das Planetengetriebe stellt eine Baueinneit dar, welche an dem Chassis 1 über einen Haltebock 17 befestigt ist. Die zentrale Achse 18 mit Hülse 19 dient als Rotationsachse für das mit Seilscheibe und Sonnenrad versehene Antriebsteil 20, sowie für das das Schwenkrad 4 antreibende auch Glockenrad genannte Abtriebsteil 21. Das Schwenkrad 4 ist über Schwenkradhebel 22 ebenfalls zentrisch zur Getriebeachse frei beweglich in Schwenkebene gelagert.

Die Übertragung des Drehmomentes geschieht durch Planetenräder 23, die an ihrem Umfang Zahnkränze aufweisen, welche mit dem Sonnenrad 20 und dem Glockenrad 21 in Eingriff stehen. Die Planetenräder 23 sind drehbar auf Achsen 24 gelagert, wobei die Achsen 24 ebenfalls drehbar in einem unteren und in einem oberen Planetenradträger 25, 26 gehalten werden. Die Planetenradträger 25, 26 sind rotationssymetrisch zur Getriebeachse 18 angeordnet und können um diese Achse eine Eigenrotation durchführen.

Der Planetenradträger 26 ist in seiner Lage in Achsrichtung festgelegt, während der untere Planetenradträger 25 durch einen vom Fädelmotor verschiebbaren Hebel 27 mittels einer Rampe 28, die auf einen ortsfesten, höhenverstellbaren Steuerring 29 einwirkt, in seiner Lage in Achsrichtung verstellbar ist. Zwischen dem ortsfesten, höhenverstellbaren Steuertring 29, welcher ein Teil der Kupplung darstellt, und dem unteren Planetenradträger 25 als weiterem Kupplungsteil ist ein Filzring 30 angeordnet, der als Kupplungsbelag für die Rutschkupplung dient. Der Anpreßdruck für die Kupplung wird von einer zentrisch angeordneten Druckfeder 31 bewirkt, die zwischen dem unteren Planetenradträger 25 und einem Metallring 32 wirksam ist, wobei sich der Metallring 32 an einem Absatz der Planetenradachsen 24 abstützt.

Da das Planetengetriebe zwischen Antrieb und Abtrieb eine Untersetzung aufweist, die so ausgelegt ist, daß in Verbindung mit dem Zwischenrad 4 eine vorgegebene Drehzahl der Wickelteller für den normalen "Play-Betrieb" erreicht wird, andererseits aber für den Bandspulbetrieb eine höhrere Drehgeschwindigkeit angestrebt wird, ist eine Möglichkeit vorgesehen, die Wirkung des Planetengetriebes aufzuheben. Zu diesem

Zweck kann der untere Planetenradring 25 über Hebel 27 mit dem ortsfesten, durch Sperrnase 33 gegen Eigenrotation gesicherten höhenverstellbaren Steuerring 29 soweit abgesenkt werden, daß am Planetenradträger 25 angebrachte Noppen 34 in Ausnehmungen 35 der Seilscheibe 20 einrasten. Dadurch können die Achsen 24 der Planetenräder 23 mit Seilscheibengeschwindigkeit angetrieben werden, und die stehenden Planetenräder 23 übertragen diese Geschwindigkeit auf das Glockenrad 21.

Dieser "Kurzschluß" des Planetengetriebes kann auch jeweils dann durchgeführt werden, wenn durch Betriebsartwechsel eine Umkehrung des Wickelantriebes erfolgen muß. Durch diese Maßnahme ist es nämlich möglich, bei ausgefädeltem Magnetband und vom Band 12 abgehobener GA Rolle 10 ohne Änderung der Bandspannung das Schwenkrad 4 von dem einen auf den anderen Wickelteller zu schwenken.

Für hochwertige Geräte mit Einzelbildschaltung in Vorwärts- und Rückwärtslaufrichtung ist diese Art der Drehrichtungsumkehr allerdings nicht zweckmäßig, da durch Abheben der GA-Rolle 10 und durch den Umschwenkvorgang das zuletzt eingestellte Bild nicht mit Sicherheit wieder eingestellt werden kann. Daher wird bei derartigen Geräten die Drehrichtungsumkehr bei anliegender GA-Rolle 10 durch den Fädelmotor 11 über die Kurvenscheibe 36 gesteuert.

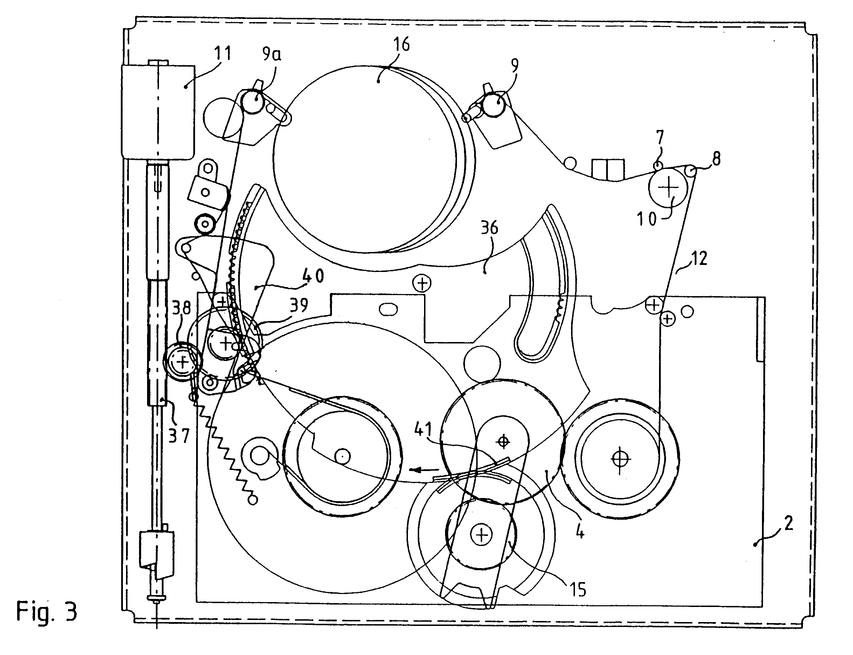

Fig. 3 zeigt die Drehrichtungsumkehr mittels einer vom Fädelmotor angetriebenen Kurvenscheibe. In der Figur ist das Magnetband 12 aus der Kassette 2 durch Fädelelement 8,9 und 9a herausgezogen und um die Kopftrommel 16 gelegt. Die GA-Rolle 10 preßt das Magnetband 12 an die Capstanwelle 7 an. Die Bandspannung ist durch Bandzugfühlhebel 40 eingestellt. Durch die Lage von Schwenkrad 4 ist der Play-Betrieb dargestellt.

Für eine Drehrichtungsumkehr bei stehender Capstanwelle 7 und beibehaltener Bandspannung wird in der beschriebenen Anordnung dem Fädelmotor 11 z.B. über eine µP-Steuerung bei Eingabe des Umkehr-Befehls eine Antriebsspannung zugeführt, durch die die Kurvenscheibe 36 von Welle 37 über Zwischenrad 38 und Treibrad 39 in Pfeilrichtung verstellt wird. Die Kurvenscheibe 36 steht über Zahnsegment 41 mit dem Planetengetriebe 15 in Eingriff, derart, daß der in Fig. 2 dargestellte, ansich ortsfeste, höhenverstellbare Steuerring 29 um einen bestimmten Winkel gedreht wird.

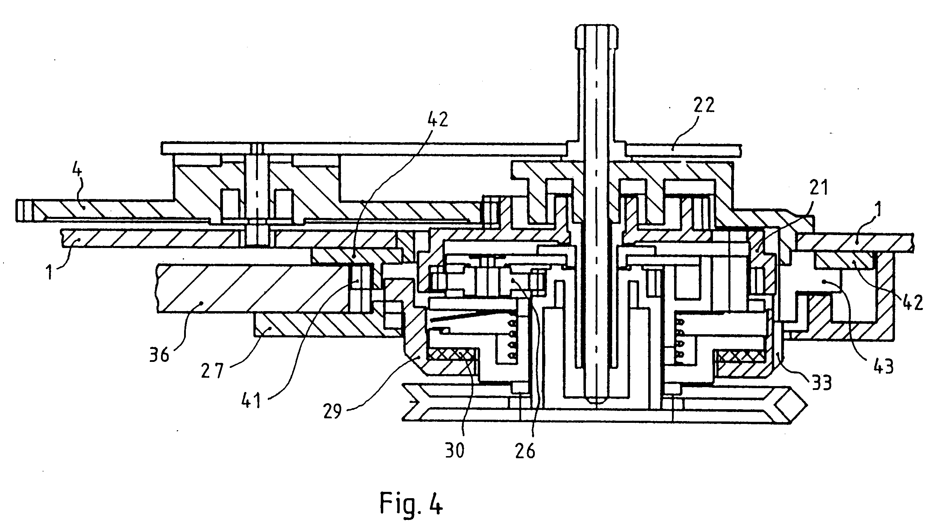

Fig. 4 zeigt in einer Schnittdarstellung die Verstellung von Steuerring 29 am Planetengetriebe. Die Darstellung des Planetengetriebes deckt sich im wesentlichen mit der von Fig. 2. Unterhalb von Blechchassis 1 ist der Teil von Kurvenscheibe 36 zu erkennen, der über Zahnsegment 41 mit einem in Chassis 1 drehbar gelagerten Stellring 42 in Eingriff steht. Mit dem Stellring 42 ist ein Stellteil 43 verbunden, welches eine Ausnehmung in Form einer länglichen Nut aufweist, in die die Sperrnase 33 des höhenverstellbaren Steuerringes 29 eingreift. Die Drehbewegung von Kurvenscheibe 36 wird über Stellring 42 mit Stellteil 43 auf die Sperrnase 33 von Steuerring 29 übertragen. Damit werden auch über den Kupplungsbelag 30 die Planetenräder 26 gedreht, die damit das Glockenrad 21 und das an Schwenkradhebel 22 befestigte Schwenkrad 4 in die gewünschte Betriebsart umsteuern. Durch den ebenfalls vom Fädelmotor 11 über nicht dargestellten Antriebsteile verschiebbaren Hebel 27 wird die Kupplungswirkung durch Höhenverstellung von Steuerring 29 eingestellt.

## Patentansprüche

1. Recorder mit einem Wickel- und Bandantrieb für eine Magnetbandkassette (2), die zwei nebeneinanderliegende, das Magnetband führende Wickelkörper (3,3a) aufweist, in welche jeweils ein über ein Schwenkrad (4) von einem Capstan-Motor (5) angetriebener Wickelteller (6,6a) eingreift, wobei die Welle (7) des Capstan-Motors (5) außerhalb der Kassette (1) angeordnet ist und Fädelelemente (8,9,9a) sowie eine Gummiandruckrolle (10) für den Magnetbandantrieb in die Kassette eingreifen, welche mittels eines Fädelmotors (11) angetriebener Steuerelemente zur Führung des Magnetbandes (12) aus der Kassette herausführbar sind, **dadurch gekennzeichnet,** daß von dem Capstan-Motor (5) über ein elastisches Antriebselement (13) ein, eine Rutschkupplung aufweisendes Planetengetriebe (14) angetrieben ist, welches mit dem Schwenkrad (4) in Eingriff steht.

2. Recorder nach Anspruch 1, **dadurch gekennzeichnet,** daß für bestimmte Betriebsarten das Planetengetriebe (14) über eine vom Fädelmotor (11) ausgelöste Steuerung mechanisch überbrückbar ist.

3. Recorder nach Anspruch 1, **dadurch gekennzeichnet,** daß die im Gehäuse des Planetengetriebes angeordnete Rutschkupplung über eine vom Fädelmotor (11) mittels eines Hebels (27) ausgelöste Steuerung in ihrer Wirkung einstellbar ist.

4. Recorder nach Anspruch 3, **dadurch gekennzeichnet,** daß die Wirkung der Rutschkupplung über einen höhenverstellbaren ortsfesten Kupplungsring (29) einstellbar ist.

5. Recorder nach Anspruch 2 oder 3, **dadurch gekennzeichnet**, daß die Rutschkupplung gleichmäßig auf die Mitnahmerotation der Planetenräder (23) einwirkt.

6. Recorder nach einem der Ansprüche 1 - 5, **dadurch gekennzeichnet,** daß die Wickelteller (6,6a) aus einem einteiligen Kunststoffteil gefertigt sind.

7. Recorder nach Anspruch 1, **dadurch gekennzeichnet,** daß das Planetengetriebe (14) mehrere, einen Zahnkranz aufweisende Plantenräder (23), vorzugsweise 3 Planetenräder aufweist, die gleichmäßig auf einem Radius verteilt sind, und daß die Planetenräder (23) mit dem antreibenden Kupplungsteil (Sonnenrad mit Seilscheibe 20) und dem angetriebenen Kupplungsteil (Glockenrad 21) über die Verzahnung in Eingriff stehen.

8. Recorder nach Anspruch 1, **dadurch gekennzeichnet,** daß das Planetengetriebe (14) eine vorgegebene Untersetzung zwischen Antriebsteil und Abtriebsteil aufweist.

9. Recorder nach Anspruch 4, **dadurch gekennzeichnet,** daß zwecks Drehrichtungumkehr, das Schwenkrad (4) bei Spielstellung vom Magnetband (12) mit anliegender Gummiandruckrolle (10), stehendem Capstanmotor (5) und eingestellter Kupplungswirkung über eine Kurvenscheibe (36) verstellbar ist.

10. Recorder nach Anspruch 9, **dadurch gekennzeichnet,** daß die Drehrichtungsumkehr vom Schwenkrad (4) durch Verdrehung des Kupplungsringes (29) mittels des Fädelmotors (11) über die Kurvenscheibe (36) bewirkt wird.

## Claims

1. Recorder including a winding and tape drive means for a magnetic tape cassette (2) which comprises two adjacent spools (3, 3a) which carry the magnetic tape and into which there engages a respective spindle (6, 6a) that is driven by a capstan motor (5) via a pivoted wheel (4), wherein the shaft (7) of the capstan motor (5) is arranged outside the cassette (1) and threading elements (8, 9, 9a) as well as a rubber pressure roller (10) for driving the magnetic tape engage in the cassette, which control elements that are driven by means of a threading motor (11) can be projected for the guidance of the magnetic tape (12) out of the cassette, characterised in that, a planetary gear (14), which comprises a frictional coupling and which is in engagement with the pivoted wheel (4), is driven by the capstan motor (5) via a resilient driving element (13).

2. Recorder in accordance with Claim 1, characterised in that, for certain operating modes, the planetary gear (14) can be mechanically by-passed by a control means which is enabled by the threading motor (11).

3. Recorder in accordance with Claim 1, characterised in that, the frictional coupling arranged in the housing of the planetary gear can have its effect adjusted by a control means enabled by the threading motor (11) by means of a lever (27).

4. Recorder in accordance with Claim 3, characterised in that, the effect of the frictional coupling can be adjusted by a stationary coupling ring (29) that can be adjusted in height.

5. Recorder in accordance with Claim 2 or 3, characterised in that, the frictional coupling acts uniformly on the driving rotation of the planetary wheels (23).

6. Recorder in accordance with any of the Claims 1 to 5, characterised in that, the spindles (6, 6a) are constructed of a single piece of synthetic material.

7. Recorder in accordance with Claim 1, characterised in that, the planetary gear (14) comprises a plurality of planetary wheels (23), preferably 3 planetary wheels, which comprise a ring gear and which are distributed uniformly at a radius, and that the planetary wheels (23) are in engagement with the driving coupling part (sun wheel and headsheave 20) and the driven coupling part (bell wheel 21) via the toothing.

8. Recorder in accordance with Claim 1, characterised in that, the planetary gear (14) comprises a predefined reduction ration between the driving part and the driven part.

9. Recorder in accordance with Claim 4, characterised in that, for the purpose of reversing the direction of rotation, the pivoted wheel (4) can be displaced by a cam plate (36) when adjusting the clearance of the magnetic tape (12) with the rubber pressure roller (10) in contact, a stationary capstan motor (5) and active coupling effect.

10. Recorder in accordance with Claim 9, characterised in that, the reversal of the direction of rotation of the pivoted wheel (4) is effected via the cam plate (36) by rotation of the coupling ring (29) by means of the threading motor (11).

## Revendications

1. Enregistreur avec un entraînement d'enroulement et de bande pour une cassette de bande magnétique (2) qui présente deux bobines (3, 3a), placées l'une à côté de l'autre qui guident la bande magnétique, dans chacune desquelles un plateau d'enroulement (6, 6a) entraîné par l'intermédiaire d'une roue pivotante (4) par un moteur cabestan (5) s'engrène, l'arbre (7) du moteur cabestan (5) étant placé a l'extérieur de la cassette (1) et des éléments d'enfilement (8, 9, 9a) ainsi qu'un galet de pression en caoutchouc (10) pour l'entraînement de la bande magnétique s'engrenant dans la cassette, qui peuvant être sortis de la cassette pour guider la bande magnétique (12) au moyen d'éléments de commande entraînés au moyen d'un moteur d'enfilement (11), **caractérisé en ce** qu'un engrenage planétaire (14), qui présente un accouplement à glissement et qui est en prise avec la roue pivotante (4), est entraîné par le moteur cabestan (5) par l'intermédiaire d'un élément d'entraînement élastique (13).

2. Enregistreur selon la revendication 1, **caractérisé en ce** que l'engrenage planétaire (14) peut être surmonté mécaniquement pour certains modes par l'intermédiaire d'une commande déclenchée par le moteur d'enfilement (11).

3. Enregistreur selon la revendication 1, **caractérisé en ce** que l'effet de l'accouplement à glissement placé dans le bâti de l'engrenage planétaire est réglable par une commande déclenchée par le moteur d'enfilement (11) au moyen d'un levier (27).

4. Enregistreur selon la revendication 3, **caractérisé en ce** que l'effet de l'accouplement à glissement est réglable par un anneau d'accouplement (29) fixe réglable en hauteur.

5. Enregistreur selon la revendication 2 ou 3, **caractérisé en ce** que l'accouplement à glissement agit de manière uniforme sur la rotation entraînée des roues planétaires (23).

6. Enregistreur selon l'une des revendications 1 à 5, **caractérisé en ce** que les plateaux d'enroulement (6, 6a) sont fabriqués en une partie en matière plastique en une pièce.

7. Enregistreur selon la revendication 1, **caractérisé en ce** que l'engrenage planétaire (14) présente plusieurs roues planétaires (23) qui présentent une couronne dentée, de préférence 3 roues planétaires, qui sont réparties de manière régulière sur un rayon et que les roues planétaires (23) sont en prise avec la pièce d'accouplement qui entraîne (roue solaire avec poulie de renvoi 20) et avec la pièce d'accouplement qui est entraînée (roue en cloche 21) par l'intermédiaire de la denture.

8. Enregistreur selon la revendication 1, **caractérisé en ce** que l'engrenage planétaire (14) présente une démultiplication prédéterminée entre la pièce d'entraînement et la pièce de sortie.

9. Enregistreur selon la revendication 4, **caractérisé en ce** que pour l'inversion du sens de rotation la roue de pivotement (4) peut être déplacée par l'intermédiaire d'un disque à came (36), la bande magnétique (12) étant en position de lecture, le galet de pression en caoutchouc (10) étant appliqué, le moteur cabestan immobilisé (5) et l'effet de l'accouplement étant arrêté.

10. Enregistreur selon la revendication 9, **caractérisé en ce** que l'inversion du sens de rotation de la roue pivotante est provoquée (4) par torsion de l'anneau de l'accouplement (29) au moyen du moteur d'enfilement (11) par le disque à came (36).
